# EUROPEAN PATENT SPECIFICATION

(11) **EP 1 867 499 B1**
(45) Date of publication and mention of the grant of the patent: **14.07.2010**
(21) Application number: 07108223.4
(22) Date of filing: 15.05.2007
(51) Int. Cl.: B60D 1/46

(54) **Tow-hook arrangement and method for coupling an object to be towed to a mobile working machine**
Abschlepphaken und Verfahren zum Ankuppeln eines von einer mobilen Arbeitsmaschine zu schleppenden Gegenstandes
Agencement de crochet de dépannage et procédé de couplage d'un objet à attacher à une machine de travail mobile

(30) Priority: 16.05.2006 FI 20065329
(43) Date of publication of application: 19.12.2007
(73) Proprietor: LH Lift Oy, 41370 Kuusa (FI)
(72) Inventor: Puustinen, Sami, 40340 Jyväskylä (FI); Kumpukallio, Pekka, 41370 Kuusa (FI)
(74) Representative: Helke, Kimmo Kalervo

(56) References cited:
- EP-A- 0 138 519
- EP-A- 0 346 885
- EP-A- 1 609 344
- BE-A- 517 549
- FR-A- 1 076 267
- GB-A- 1 446 065
- US-A- 4 542 913
- US-A- 5 692 573

## Description

The present invention relates to a tow-hook arrangement for a mobile working machine, which includes
- a body to be attached to the mobile working machine,
- a boom pivoted at one end to the body,
- a guide arranged to move linearly in the boom, and a towing element fitted to it, which are arranged to be lowered and raised relative to the body using the boom,
- a medium-operated operating device for moving the towing element linearly, and
- a locking mechanism for locking the towing element in place, when towing the object connected to the towing element,
and the locking mechanism includes a guide arrangement fitted to the body and a locking element arranged to move vertically in the guide arrangement, which vertical movement is arranged to be achieved using the guide arranged to move linearly in the boom.

US patent 5,692,573 discloses prior art for the locking in place of tow hooks of mobile working machines, such as, for example tractors. It discloses a solution, in which a slide, at the end of which is a tow hook acting as the towing element, is pivoted to the body of the tow-hook arrangement. The slide, and with it also the tow hook, can be moved, using an operating device, backwards and forwards linearly in the longitudinal direction of the mobile working machine. The movement brings the tow hook more into the field of vision of the driver sitting in the cab. In addition, the tow hook can be raised and lowered vertically, so that, for example, a trailer or similar towable object can be picked up onto the tow hook, or detached from the tow hook.

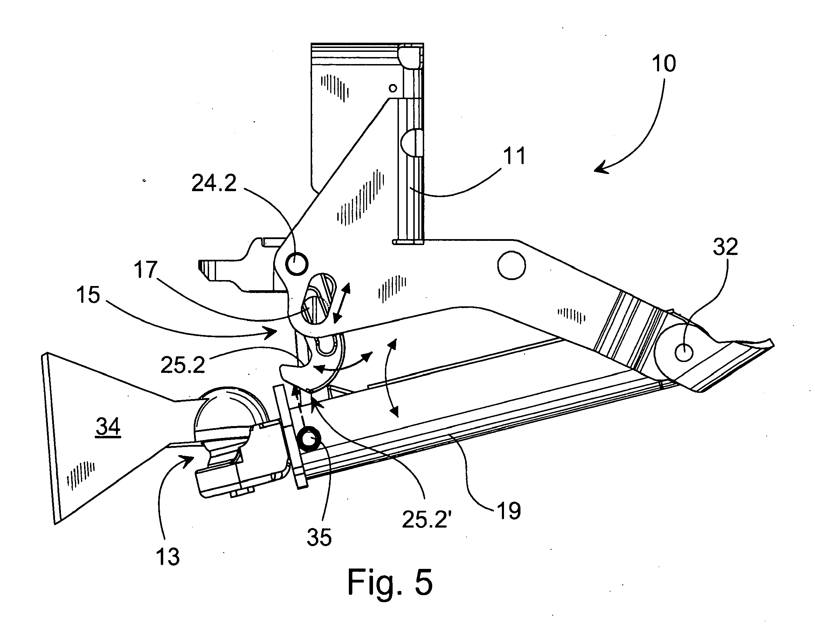

Figure 5 of the US patent shows the locking mechanism of the tow hook. In this case, the locking of tow hook, more particularly the prevention of the tow hook's linear movement in the direction of the mobile working machine, takes place by there being, in the rear panel of the body of the tow hook, two flanges with holes, parallel to the longitudinal direction of the mobile working machine, between which a loop in the slide fits. The retainer element is a pin that runs through the loop and the holes. The locking device of the pin is a complicated mechanism based on spring elements. There are several moving parts, which are, in addition, relatively small. Such a mechanism will be exposed to the knocks, to which the rear of a tractors is, as is known, subject in many situations. It can therefore be easily broken. In addition, the mechanism is cost-intensive, as it includes several small and precisely dimensioned components.

Another drawback in the solutions disclosed in the US patent is that the same element is used to prevent both linear movement of the tow hook in the longitudinal direction of the mobile working machine and also to support the tow hook in the transportation position. This imposes great strains on the flanges of the rear panel and the pin, which may lead to fatigue in critical structural components of the tow-hook arrangement.

A second embodiment of the prior art is disclosed in EP patent application publication number 1 609 344 A1, disclosing all features of the preamble of claim 1. In it, an abutment organ 15, by means of which the force caused by the towing is transferred from one point to the body, is fitted immovably to the body. The abutment organ 15 is in contact with a spring-loaded locking element 17, which moves vertically in a guide arranged from one point. There are many components that must be machined and attached, and they are small.

US patents 3,863,955 and 4,542,913, as well as EP patent 0 346 885 B1 represent other embodiments of the prior art disclosing locking in tow-hook arrangements that are pushed backwards and lowered.

The present invention is intended to create a tow-hook arrangement that is simple and reliable in construction and operation. The characteristic features of the arrangement according to the invention are stated in Claim 1.

In the arrangement according to the invention, the towing element is locked in place in an ingenuously simple manner. The locking mechanism, by means of which linear movement of the towing element in the longitudinal direction of the mobile working machine is prevented when towing an object, includes a guide arrangement fitted to the body and a locking element arranged to move vertically in the guide arrangement. The vertical movement of the locking element is arranged to be created using a guide arranged to move linearly in the boom, in connection with which the towing element is fitted. In addition, the guide arrangement includes elongated guide openings arranged in both sides of the body, between which the locking element is fitted.

According to one embodiment, a vertical support surface for the locking mechanism is fitted to the guide, in order to transfer the force directed to the towing element through the locking element to the body, and in addition, a guide surface to move the locking element out of the way of the vertical support surface when retracting the towing element into the boom. The locking construction is extremely simple and rugged. In addition, it does not complicate the construction of the tow hook.

According to one embodiment, the body includes its own carrier elements for supporting the towing element in the transportation position. Thus each carrier/locking element can receive only certain forces, so that compromises are not required in their structural solutions. Also the locking of the carrier elements requires no human interaction at all. This is achieved by means of an operationally ingenious way of arranging the carrier elements and the attachment point of the lifting arms fitted to the boom, relative to each other. This allows the carrier elements to move spontaneously away from the support points when the boom is being raised and, once the support points have been passed, to turn back, catching the carrier elements in their grip.

According to one embodiment, the guide, in which the towing element is attached, can surprisingly also be formed of the operating device itself. This will further reduce the number of sub-components and simplify the structures.

The application of the invention achieves benefits in many ways. First of all, the mechanical implementation according to the invention is extremely simple and reliable in operation. The invention eliminates the need for locking mechanisms based on separate springs, which are liable to damage, or are otherwise uncertain in operation and subject to wear. The guide-movement mechanism of the locking is, in addition, foolproof in operation. The gravity return movement of the locking element in the guide arrangement takes place certainly. There is no need for action by the driver of the mobile working machine, or for an 'assistant' when coupling the towable object. In addition, when towing the towable object, the mechanism creates a sure lock. The lock remains in place, because the object being towed creates a force that acts on the lock to hold it in place. The orientation of the guide arrangement also helps in this.

Large and solid support structures are available to transmit forces from the towing element to the mobile working machine. Thus the loadings and strains imposed on the tow-hook structures remain reasonable. However, the arranging of solid support-surface structures does not increase the size of the hook arrangement. This allows the arrangement to still be easily fitted to the otherwise very cramped rear parts of modern mobile working machines. The tow-hook arrangement also does not reduce the ground clearance of the mobile working machine, because its structural solutions protrude surprisingly little.

Other characteristic features of the invention are stated in the accompanying Claims while other advantages achieved by means of the invention are referred to in greater detail in the description portion.

The invention, which is in no way restricted by the embodiments described in the following, is examined in greater detail with reference to the accompanying drawings, in which
- Figure 1: shows one tow-hook arrangement according to the invention in the transportation position,
- Figure 2: shows the tow-hook arrangement shown in Figure 1 in the pick-up position,
- Figure 3: shows the tow-hook arrangement shown in Figure 1 in the pick-up position, seen at an angle from above,
- Figure 4: shows the body of the tow-hook arrangement, seen at angle from below,
- Figures 5 and 6: show a side view of the locking mechanism, and
- Figures 7a and 7b: show a second embodiment for implementing the guide of the tow-hook arrangement.

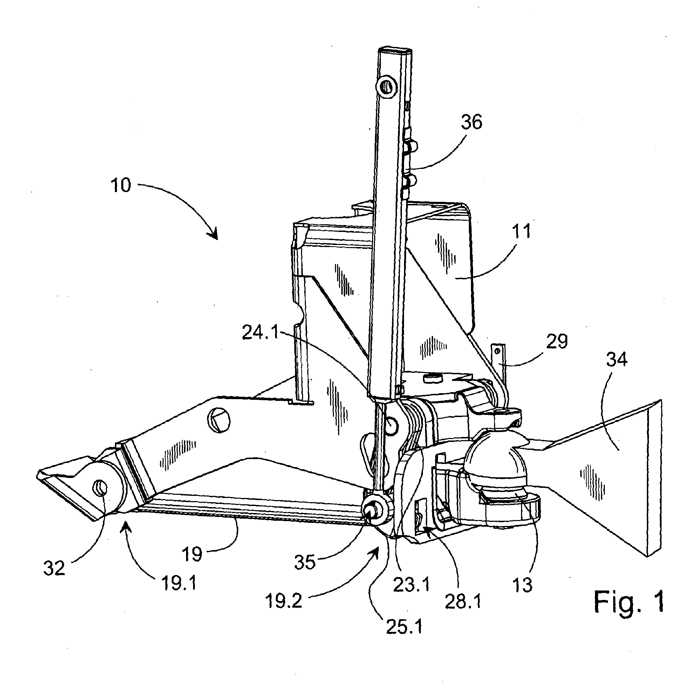

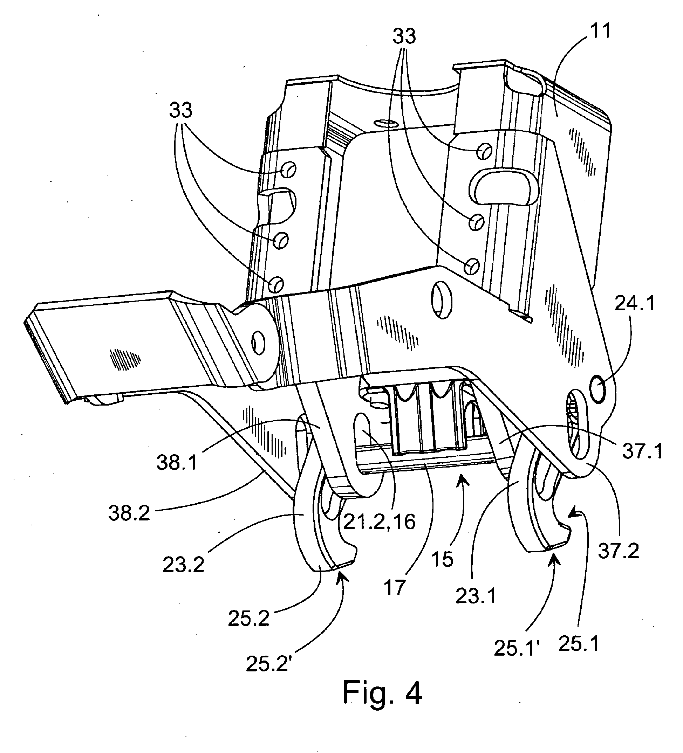

Figures 1 - 3 show some examples of embodiments of the tow-hook arrangement 10, according to the invention, for a mobile working machine, seen from different directions. The arrangement 10 can be attached to a mobile working machine, examples of which are industrial and agricultural tractors. In the body 11 of the arrangement 10, there is equipment (securing points 33 / shaping compatible with the body of the mobile working machine), by means of which the arrangement 10 can be attached to the chassis of the tractor, in which a corresponding attachment location for the arrangement 10 can also be arranged. In addition, the rear-end structures of the tractor can also be used as attachment point, in which case the attachment bolts will be parallel to the longitudinal direction of the tractor. Corresponding securing bolt holes 33 are clearly visible in Figure 4. The chassis of the tractor and/or the arrangement 10 can also be shaped to suit each other, so that an attachment will be created that is sturdy in all respects.

The arrangement 10 comprises, as basic structures, a body 11, a boom 19, and a guide 12, with a towing element 13 fitted to its end, fitted to the boom 19. In this case, the guide is formed of its own slide component 12, but it can be implemented more simply, as will be described later. The towing element is formed of a ball 13 that acts as a towing catch, or of a corresponding pin or hook, which in the transportation position shown in Figure 1 protrudes from the boom 19, in connection with the end 19.2. This end 19.2 of the boom 19 is set in the tractor in such a way that it is in connection with the rear end of the tractor. Thus, the object 34 to be pulled/towed, of which a trailer is one example, can be detachably coupled to the towing element 13. The figures show only the towbar 34 of the trailer.

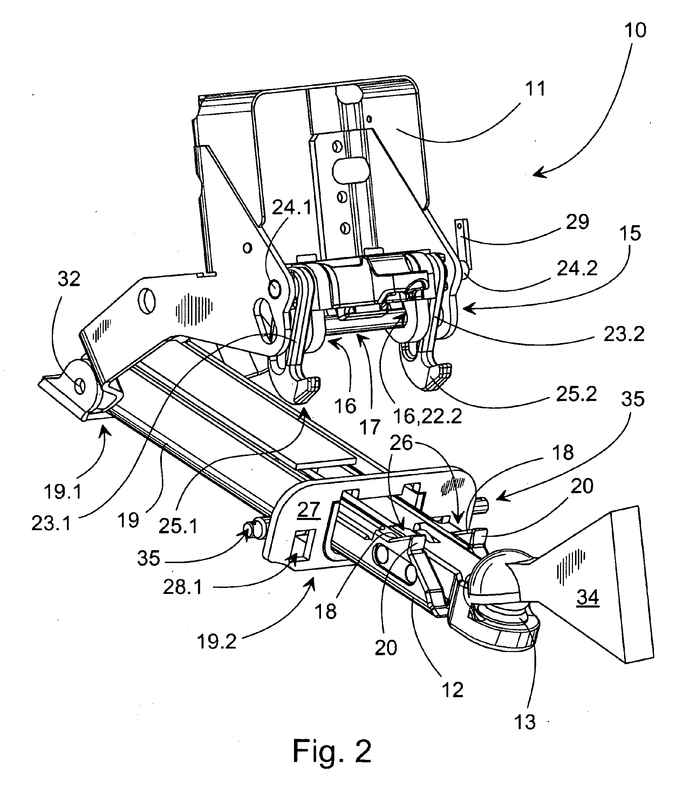

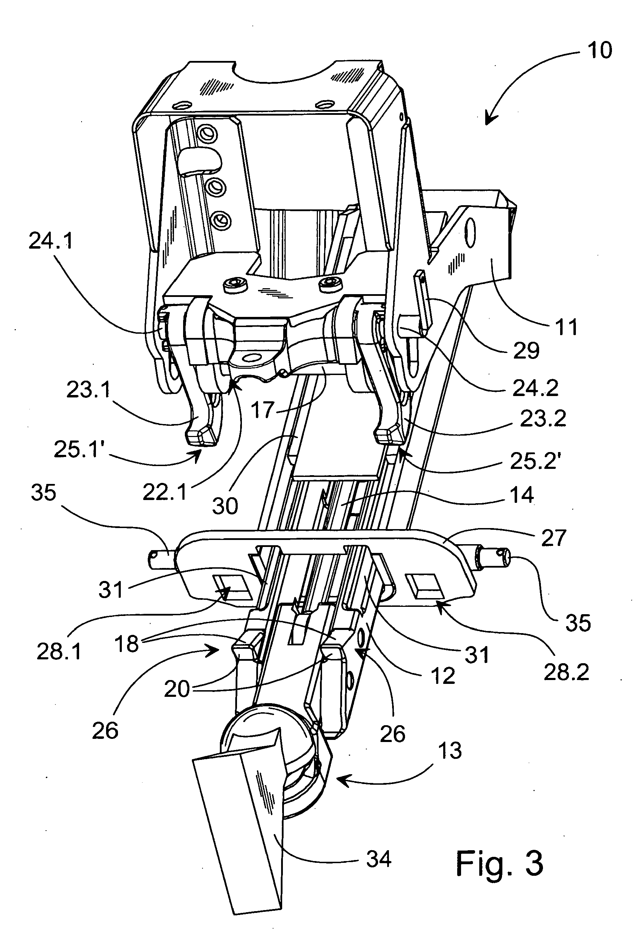

At its other end 19.1, the boom 19 is pivoted to the body 11 at a pivot point 32, in order to permit the end 19.2 of the boom 19 at the towing element 13 to be lowered and raised. The boom 19 includes a guide 12 arranged to move linearly relative to it, and the towing element 13 fitted to it. These can be seen clearly in Figures 2 and 3. The guide 12 and the towing element 13 can be lowered with the boom 19 and raised relative to the body 11 of the arrangement 10.

The arrangement 10 also includes a medium-operated operating device, such as, for example, at least one hydraulic cylinder 14. It can be clearly seen in Figure 3. By means of the cylinder 14, the towing element 13 and the slide 12 can be moved linearly in the longitudinal direction of the mobile working machine. In this embodiment, the jacket component of the cylinder 14 is attached at its end to the pivot point 32 of the boom 19 and the piston in the towing element 13, its continuation, or the slide 12. The attachment point has no significance in terms of the invention. By means of the boom 19, slide 12, and operating cylinder 14, a path in the longitudinal direction of the tractor is created for the towing element 13, for the effortless coupling or uncoupling of the object being towed, such as, for example, a trailer.

The body 11 of the tow-hook arrangement 10 also includes at least one locking mechanism 15. By means of it, the towing element 13 can be locked in place. Here, the term locking in place refers to at least preventing linear movement of the towing element 13 in the longitudinal direction of the mobile working machine, when towing an object coupled to the towing element 13. The mechanism 15 includes a guide arrangement 16 and a locking element 17, which is in the guide arrangement 16, arranged to move mainly vertically in the guide arrangement 16. In this case, the guide arrangement 16 and thus also the locking element 17 connected to it, are in the body 11. The guide arrangement 16 in the body 11 ensures a sturdy construction for the locking element 17 and the transmission of forces to the body 11. The vertical movement of the locking element 17 is arranged to be created surprisingly by means of elements arranged to move linearly in the boom 19, which can include a guide 12 and at least a towing element 13, which are moved backwards and forwards in the longitudinal direction of the mobile working machine by the hydraulic cylinder 14.

In order to achieve the vertical movement of the locking element 17, and to lock the towing element 13 in place, a mainly vertical support surface 20 and a guide surface 18, for example, are fitted in connection with the guide 12. These can also be said to belong to the locking mechanism 15. The surfaces can also equally well be, for example, in a continuation of the towing element 13. The vertical support surface 20 is used to transfer the force acting on the towing element 13 through the locking element 17 to the body 11 of the arrangement 10. The task of the guide surface 18 is to lift, raise, guide the locking element 17 vertically in the guide arrangement 16, in such a way that the locking element 17 will move out of the way/from in front of the vertical support surface 20 when the towing element 13 is retracted into the boom 19, in other words, when moving the towing element 13 linearly from the pick-up position to the transportation position. In other words, the guide surface 18 and the support surface 20 interact with the locking element 17.

In this case, guide surface 18 and the vertical support surface 20 are formed of two triangular formations 26 fitted next to each other on the upper surface of the slide 12, or corresponding guide. Instead of two separate formations, it is also possible to apply, for example, a single continuous triangular formation, or even more formations than only two. The guide surface 18 is formed by the hypotenuse portion of the triangles 26. The vertical support surface 20 of the locking element 17 is formed by the small side of the triangles 26, which faces backwards in the longitudinal direction of the mobile working machine. It should be noted that the small side acting as the support surface 20 need not necessarily be at completely right angles to the slide 12. In the support surface 20 and also in the path of the locking element 17, there can also be at least a small horizontal dimension. Mainly however, the shapes and paths extend vertically. The formation 26 is integrated in the slide 12, being thus in the same structure as it. This makes the formation truly durable and easily manufactured.

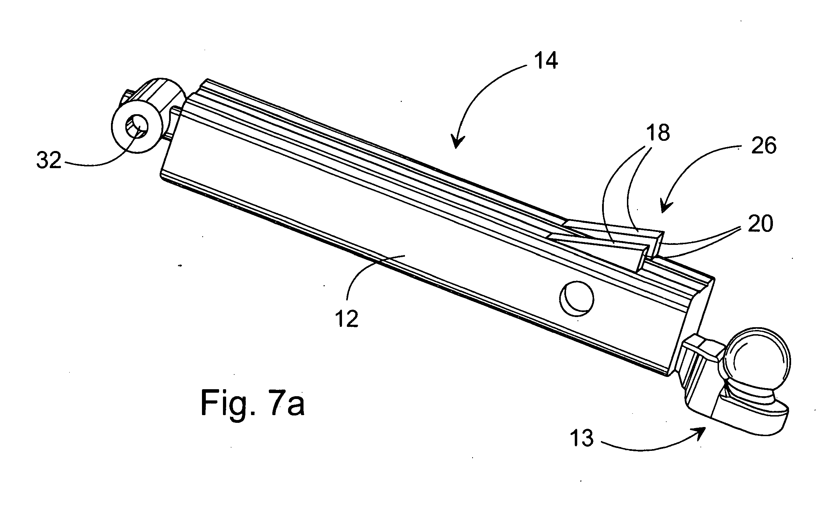

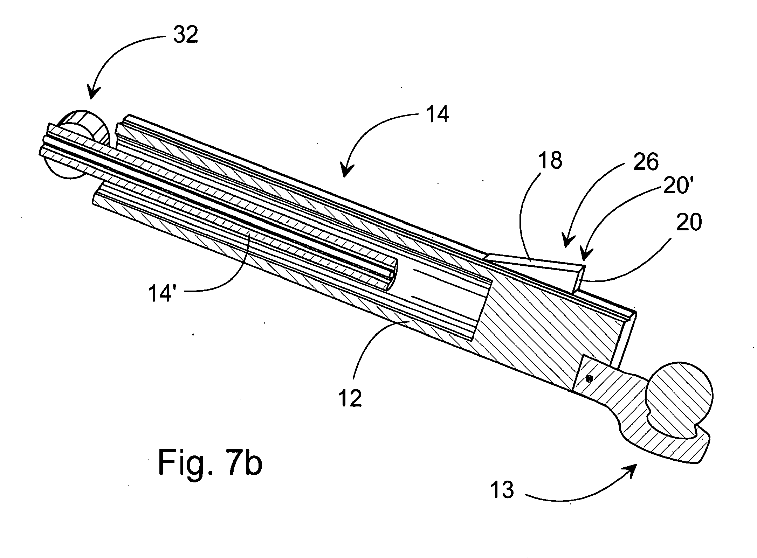

In the case of the embodiment described, the arrangement 10 includes a slide 12 arranged to move linearly in the boom 19 and, as towing means, a towing element 13 that protrudes from the end 19.2 of the boom 19 in its transportation position. It should be noted that an embodiment without a slide is also possible. In that case, for example, the hydraulic cylinder 14 can surprisingly form the slide 12 in itself. This embodiment is described slightly later in the description portion, with reference to Figures 7a and 7b.

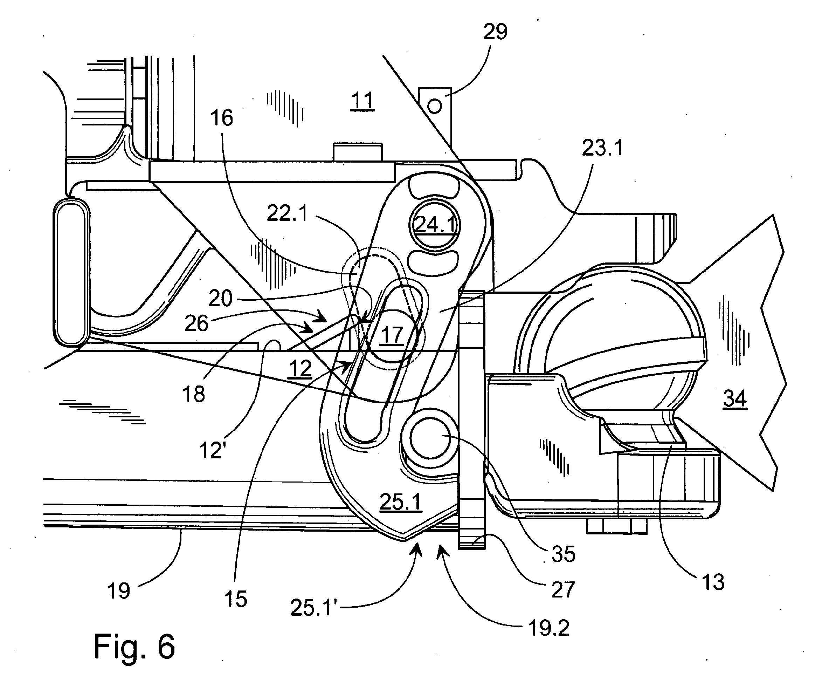

The following describes in greater detail an embodiment of the locking 15, 17 and the guide arrangement 16, with reference to Figures 4 - 6. Now the guide arrangement 16 includes elongated guide openings 21.1, 21.2 fitted to the body 11, which are on both sides relative to the boom 19 when examined in the transverse direction of the mobile working machine. In this case, the locking element formed from a solid tubular rod is all the time between the guide openings 21.1, 21.2 transversely relative to the longitudinal direction of the tractor and its ends are in the openings 21.1, 21.2. Instead of a single rod, the locking element 17 can also be formed from two or more rods, or more generally profiles, that are arranged axially relative to each other. The elongated oval-shaped guide openings 21.1, 21.2 are oriented ingeniously in the vertical-horizontal direction, in such a way that the effect of the force caused by towing the trailer is directed to the towing element 13 and the slide 12, more generally to the guide, presses the locking element 17 against the support surface 20. As can be seen from the figures, in that case the guide openings 21.1, 21.2 are slanted slightly forwards, so that their upper parts are closer to the front end of the mobile working machine and their lower parts are closer to the rear end of the mobile working machine.

The location of the guide openings 21.1, 21.2 can be defined, for example, as follows. In the lower part, the openings 21.1, 21.2 are in the flange 37.1, 38.1 of the body 11 in such a way that the locking pin 17 is directly in connection with the upper surface 12' of the slide 12, or even trails in the slide 12. The upper parts of the openings 21.1, 21.2 are in such a way that the locking pin 17 is able to pass the upper point of the guide surface 18, i.e. the uppermost point 20' of the support surface 20 (Figure 7b).

Of course, the guide openings 21.1, 21.2 could also be entirely vertical elongated openings. In that case, it would be more uncertain whether the rod 17 would remain against the support surface 20, especially when driving down a bumpy hill, when the trailer mist even push the mobile working machine. It should be noted that even a very small slant in the orientation of the guide openings 21.1, 21.2 will be sufficient to stabilize the rod 17 against the support surface 20. On the other hand, in the guide 20 too there can be a groove for the locking rod 17 immediately after the support surface 20. Thus the rod 17 can even be partly inside the guide 13 in the transportation position (not shown).

In addition, there are carrier elements 23.1, 23.2 pivoted to the body 11, to support the boom 19 in the transportation position. At one end of the carrier elements 23.1, 23.2, there is a pivot 24.1, 24.2 and at the opposite end a grip 25.1, 25.2. The grip 25.1, 25.2 is used to carry the boom in the transportation position. Now the grips 25.1, 25.2 are shaped as hooks opening towards the rear end of the tractor.

The elongated guide openings 21.1, 21.2 fitted to both sides of the body 11 are arranged in the inner flanges 37.1, 38.1 (Figure 4) that point downwards from the body 11. Next to, and at a distance from these are outer flanges 37.2, 38.2 pointing downwards from the body 11. Freely hanging carrier elements 23.1, 23.2 are fitted in the space remaining between these inner and outer flanges 37.1, 38.1, 37.2, 38.2. Thus the carrier elements 23.1, 23.2 are protected and are permitted to rotate in a controlled manner relative to the pivot point 24.1, 24.2. The openings in the flanges 37.1, 38.1 are in them for reasons of manufacturing technique while the openings in the carrier elements 23.1, 23.2 are to lighten them.

In addition, the boom 19 includes a rear panel 27, which can be clearly seen in Figures 1 - 3. In the rear panel, there are catch openings 28.1, 28.2 for the points of the hooks 25.1, 25.2 of the carrier elements 23.1, 23.2. The openings 28.1, 28.2 permit a solid and sufficient place for the hooks 25.1, 25.2 under the lift points 35. In the rear panel 27 there are also recesses for the triangular formations 26 in the guide 12. Thus the guide and support surfaces 18, 20 formed from the two formations 26 do not weaken the rear panel 27. The cross-sectional profile of the rear panel 27 is a closed construction, which makes the cross section of the boom 19 at least a partly closed structure. Of course, the boom 19 can have a closed cross section at other points too.

The boom 19 also includes attachment points 35 on both sides for the lift arms 36. Figure 1 shows one of these lift arms 36. Now the attachment points 35 in the boom 19 and the carrier elements 23.1, 23.2 pivoted to the body 11 are arranged operationally relative to each other in such a way that the carrier elements 23.1, 23.2 turn out of the way of the attachment points 35 when the boom 19 is raised. In addition, the carrier elements 23.1, 23.2 also return by themselves below the attachment points 35, once the attachment points 35 have passed them. This ingenious arrangement permits the boom 19, and with it also the towing element 13 to be locked into its transportation position, without human interaction.

The pivots 24.1, 24.2 of the carrier elements 23.1, 23.2 can include a rotation stop 29, for controlling the operation of the carrier elements 23.1, 23.2. The lever stop 29 can be used to release the grips 25.2, 25.2 of the carrier elements 23.1, 23.2 from the attachment points 35 of the lift arms 36 and at the same time from the catch openings 28.1, 28.2 of the rear panel 27. A cable run from the cab of the tractor can also be connected to the lever-like stop 29, or else it can be operated with the aid of a medium-operated operating device (not shown). In this case, the operating device can be even single-acting, because the arrangement of the boom carrier elements 23.1, 23.2 and the lift-arm pins 35 relative to each other causes the towing element 13 to lock into its transportation position when the boom 19 is raised.

The boom 19 can also include slide rails 30 and corresponding shapes 31 in the slide 12 or generally in the guide (Figure 3). Their joint action creates a smooth linear movement of the slide 12 in the boom 19, when the slide 12 is moved backwards and forwards in the longitudinal direction of the mobile working machine.

Figures 7a and 7b show a second embodiment of the implementation of the guide. For reasons of simplification, the whole arrangement 10 is not shown in the figure. However the guide 12 in the boom 19 is formed in a surprising manner part of the hydraulic cylinder 14. The use of such an embodiment further simplifies the construction of the arrangement 10 and reduces manufacturing costs, because the special slide component is eliminated. In addition, the function is fitted into a smaller space.

Now the formations 26 can be in the base structures of the towing element 13, or in the cylindrical part of the hydraulic cylinder 14 arranged with a square cross section, in which the piston rod 14' moves. Now the guide surface 18 and the vertical support surface 20 are on the upper surface 12' of the slide 12. Compared to the embodiment described above, the hydraulic cylinder 14 has been turned to face in the opposite direction. Now the end of the piston rod 14' is attached to the pivot point 32 and the cylindrical part 12 is at the end with the towing element 13. The feed and exit of the medium takes place through the piston rod, so that external piping is not required. This also simplifies the structures. It should be noted in addition that this slide-less embodiment can equally well also be applied to other kinds of locking mechanisms 15 than that shown in this application context. One such can be, for instance, the locking disclosed in US patent 5,692,573.

The following is a description of the method according to the invention for coupling a towable object to a tow-hook arrangement 10 fitted to a mobile working machine. When it is wished to couple a trailer behind a tractor, the tractor is reversed to bring its rear within reach of the towbar 34 of the trailer. After this, the slide 12 and the towing element 13 forming part of the end of it are released from the transportation position shown in Figure 1 (excluding the towbar 34 shown in Figure 1), and moved in the boom 19 fitted to the body 11 to the pick-up position of the towable object, i.e. to the situation shown in Figure 2.

According to one embodiment, this can take place in such a way that first the lift arm 36 is used to raise the boom 19 very slightly and at the same time the hooks 23.1, 23.2 are rotated away from under the attachment points 35 on the boom 19 for the lifting arms 36. The rotation of the hooks 23.1, 23.2 takes place using the lever 29. Once the rotation has been performed, the lift arms 36 are lowered to the lower position. The boom 19 pivoted from point 32 to the body 11, together with the slide 12, then lowers the towing element 13 to its pick-up position. At the same time, the cylinder 14 is used to move the towing element 13 backwards in the longitudinal direction of the tractor, as a result of which the towing element 13 and the slide 12 reach a sufficiently backwards and downwards directed position to pick up the towbar 34 of the trailer from on top of the support under the towbar 34.

Next, the tractor is perhaps reversed slightly and the towable object 34 is picked up onto towing element 13. After the pickup (Figure 2), the towing element 13 and the slide 12 are moved back from the pick-up position to the transportation position and locked in place by the locking mechanism 15, 23.1, 23.2, 35 in order to tow the object 34 to be towed. The return movement can be performed, such as, for example, in such a way that first the boom 19 and the towing element 13 arranged in it and slide 12 are raised to their upper position and then the cylinder 14 is used to retract the slide 12 and the towing element 13 attached to it inside the boom 19. When using the lift arms 36 to raise the boom 19 to the upper position (the solid arrow showing the path of motion in the boom 19 in Figure 5), the under surfaces 25.1', 25.2' of the carrier hooks 25.1, 25.2 pivoted to the body 11, by means of which carrier hooks the boom 19 and thus also the towing element 13 and slide 12 fitted to it are supported in their transportation position, interact with the attachment point 35 of the lift arms 36 in the boom 19 (the broken-line arrow in Figure 5). In the interaction, the hooks 23.1, 23.2 turn out of the way of the attachment points 35 (the solid arrow showing the path of motion in the hook 23.1 in Figure 5). Once they have passed the attachment points 35, the hooks 23.1, 23.2 return to their hanging position. When they return, the hooks 23.1, 23.2 take up beneath their upper position raised attachment points 35 and perform the carrying of the boom 19, and thus also of the towing element 13 and the slide 12.

Once the boom 19 is being carried, the slide 12 can be retracted into the boom 19, and the towing element 13 arranged in connection with it in connection with the end 19.2 of the boom 19, i.e. a linear movement for them is performed in the longitudinal direction of the mobile working machine. When locking the towing element 13 and the slide 12 in place, in the locking element 17 movable vertically in the guide arrangement 16 fitted to the body 11 belonging to the locking mechanism 15, through which the force acting on the towing element 13 and the slide 12 when towing the object 34 to be towed is transmitted to the body 11 of the tow-hook arrangement 10, a vertical movement (the arrow showing the path of movement in the element 17 in Figure 5) is create by means of the linear guide 12 arranged to move linearly in the boom 19. The vertical movement is created by the linear transfer movement of the towing element 13 and thus also the guide 12 from the pick-up position to the transportation position. Generally, it is possible to refer again to the linear movement of the elements arranged to move in the boom 19.

More particularly, this can take place as follows. When retracting the towing element 13, the vertical support surface 20 rising above the upper surface 12' of the slide 12 comes directly in the path of the locking element 17 lying in connection with the upper surface 12' of the slide 12. As a result, the slanting guide surface 18 in front of the support surface 20 raises the locking pin 17 in the guide openings 22.1, 22.2 of the body 11, when the pin 17 is able to pass the support surface 20 (the arrow in Figure 5). Once the guide surface 18 has been passed, the pin 17 drops back in the guide openings 22.1, 22.2 into contact with the upper surface 12' of the slide 12. At the same time, the slide 12 and the towing element 13 at the end of it have reached their retracted position in the boom 19, when their linear movement stops. As a result, the locking pin 17 rests firmly against the support surface 20 and transmit the effect of the force being transmitted from the towing element 13 through the slide 12 to the body 11 of the tow hook 10. Thus no load is directed to the hydraulic cylinder 14 when towing a trailer. Correspondingly, the uncoupling of the trailer can take place according to the same procedure. The locking mechanism 15, 23.1, 23.2, 35 of course holds the tow hook 13 in the transportation position, even when no trailer is being towed.

The effect of the forces in the construction according to the invention is particularly advantageous and even distributed in all ways. When the tow hook 10 is in the towing position, the middle area of the locking element 17 receives the triangular formation 26 of the guide 12 fitted between the guide arrangement 16. On both sides of the guide contact, the locking element 17 is in contact from its end in the guide arrangement 16 and thus in contact with the body 11. The loading is then distributed more evenly to the structures and essentially more extensively in the transverse direction of the mobile working machine and the tow-hook arrangement 10. The guide and body structures 12, 11 can be utilized evenly over their entire width the receive the forces.

On the basis of the above, it should be understood that the tow-hook arrangement 10 can also include other structural components than only those described above. For example, there can be such components in the attachment between the towing element 13 and the guide 12. However, their implementation will be entirely obvious to one skilled in the art and they do not affect the basic idea of the invention.

It must be understood that the above description and the related figures are only intended to illustrate the present invention. The invention is thus in no way restricted to only the embodiments disclosed or stated in the description, but many different variations and adaptations of the invention, which are possible within the scope defined in the accompanying Claims, will be obvious to one skilled in the art.

## Claims

1. Tow-hook arrangement (10) for a mobile working machine, which includes
- a body (11) to be attached to the mobile working machine,
- a boom (19) pivoted at one end (19.1) to the body (11),
- a guide (12) arranged to move linearly in the boom (19), and a towing element (13) fitted to it, which are arranged to be lowered and raised relative to the body (11) using the boom (19),
- a medium-operated operating device (14) for moving the towing element (13) linearly, and
- a locking mechanism (15) for locking the towing element (13) in place, when towing the object (34) coupled to the towing element (13),
and the locking mechanism (15) includes a guide arrangement (16) fitted to the body (11) and a locking element (17) arranged to move vertically in the guide arrangement (16), which vertical movement is arranged to be achieved using the guide (12) arranged to move linearly in the boom (19), **characterized in that** the guide arrangement (16) includes elongated guide openings (21.1, 21.2) arranged in both sides of the body (11), between which the locking element (17) is fitted.

2. Arrangement (10) according to Claim 1, **characterized in that,** in connection with the guide (12), are arranged on its upper surface (12')
- a vertical support surface (20) for transferring the force directed to the towing element (13) through the locking element (17) to the body (11) and
- a guide surface (18) for moving the locking element (17) out of the way of the vertical support surface (20) when retracting the towing element (13) into the boom (19).

3. Arrangement (10) according to Claim 1 or 2, **characterized in that** the operating device (14) is arranged to form the said guide (12).

4. Arrangement (10) according to Claim 1, **characterized in that** the guide openings (21.1, 21.2) are oriented in such a way that the force acting on the towing element (13) is arranged to hold the locking element (17) against the support surface (20).

5. Arrangement (10) according to any of Claims 1- 4, **characterized in that** carrier elements (23.1, 23.2) are pivoted to the body (11) for supporting the boom (19) in the transportation position, one end of the carrier elements (23.1, 23.2) is pivoting (24.1, 24.2) and the opposite end has a grip (25.1, 25.2) for supporting the boom (19).

6. Arrangement (10) according to any of Claims 1 - 5, **characterized in that** the elongated guide openings (21.1, 21.2) fitted to both sides of the body (11) are fitted to inner flanges (37.1, 38.1) hanging downwards from the body (11), and at a distance to which outer flanges (37.2, 38.2) hanging downwards from the body (11) are fitted, and the said carrier elements (23.1, 23.2) are pivoted to hang between the space of the inner and outer flanges (37.1, 38.1, 37.2, 38.2).

7. Arrangement (10) according to any of Claims 1 - 6, **characterized in that** the guide surface (18) and the vertical support surface (20) are arranged to form a triangular formation (26) fitted to the upper surface (12') of the guide (12), in which the said guide surface (18) is formed by the hypotenuse portion of the triangular formation (26) and the vertical support surface (20) of the locking element (17) is formed by the small side portion of the triangular formation (26).

8. Arrangement (10) according to any of Claims 1 - 7, **characterized in that** a rear panel (27) with a closed cross-sectional profile, which includes catches (28.1, 28.2) for the grips (25.1, 25.2) of the carrier elements (23.1, 23.2) is fitted to the boom (19).

9. Arrangement (10) according to Claims 1 - 8, **characterized in that** the boom (19) includes attachment points (35) for lift arms (36), which said attachment point (35) and the pivoted carrier elements (23.1, 23.2) are arranged operationally relative to each other in such a way, that the carrier elements (23.1, 23.2) are arranged to move out of the way of the attachment points (35) when the boom (19) is raised and then to return under the attachment points (35).

10. Arrangement (10) according to any of Claims 1 - 9, **characterized in that** a rotation stop (29) is fitted to the pivots (24.1, 24.2) of the carrier elements (23.1, 23.2), in order to release the grips (25.1, 25.2) of the carrier elements (23.1, 23.2) from the attachment points (35).

11. Arrangement (10) according to any of Claims 1 - 10, **characterized in that** slide rails (30) are arranged in the boom (19) and corresponding shapes (31) in the guide (12), in order to create a smooth linear movement for the guide (12) in the boom (19) .

12. Arrangement (10) according to any of Claims 1 - 11, **characterized in that,** in the towing position, the middle area of the locking element (17) arranged to the guide arrangement (16) of the body (11) in connection with its ends, is arranged to correspond to the triangular formation (26) of the guide (12) fitted between the guide arrangement (16).

13. Arrangement (10) according to any of Claims 1 - 12, **characterized in that** the arrangement (10) is fitted to a tractor.

14. Mobile working machine, for example, an industrial or agricultural tractor, **characterized in that** the mobile working machine includes an arrangement (10) according to any of Claims 1 - 13.

## Patentansprüche

1. Für eine mobile Arbeitsmaschine bestimmte Zughakenanordnung (10), die
- einen an der Arbeitsmaschine zu befestigenden Rahmen (11),
- einen an dem Rahmen (11) mit seinem einen Ende (19.1) gelenkig befestigten Ausleger (19),
- eine an dem Ausleger (19) linear bewegliche Führung (12) und ein an dieser angeordnetes Zugelement (13), welche beide mit Hilfe des Auslegers (19) relativ zum Rahmen (11) abgesenkt und angehoben werden können,
- einen mediumbetätigten Aktor (14) zum linearen Bewegen des Zugelements (13) und
- einen Verriegelungsmechanismus (15) zum Verriegeln des Zugelements (13) an seiner Stelle für die Dauer des Ziehens des an das Zugelement (13) gekoppelten Objekts (34) umfasst,
und der Verriegelungsmechanismus (15) eine am Rahmen (11) angeordnete Führungsvorrichtung (16) und ein an der Führungsvorrichtung (16) vertikal bewegliches Verriegelungselement (17) aufweist und diese vertikale Bewegung durch eine am Ausleger linear bewegliche Führung bewerkstelligt wird, **dadurch gekennzeichnet, dass** die Führungsvorrichtung (16) beidseitig am Rahmen (11) angeordnete längliche Führungsöffnungen (21.1, 21.2) umfasst, zwischen denen das Verriegelungselement (17) angeordnet ist.

2. Anordnung (10) nach Anspruch 1, **dadurch gekennzeichnet, dass** an der Führung (12) an deren Oberseite (12')
- eine vertikale Stützfläche (20) zum Übertragen der auf das Zugelement (13) wirkenden Kraft über das Verriegelungselement (17) auf den Rahmen (11) und
- eine Führungsfläche (18) zum Verlagern des Verriegelungselements (17) aus dem Weg der vertikalen Stützfläche (20) beim Zurückziehen des Zugelements (13) auf den Ausleger ausgebildet sind.

3. Anordnung (10) nach Anspruch 1 oder 2, **dadurch gekennzeichnet, dass der** Aktor (14) die besagte Führung (12) bildet.

4. Anordnung (10) nach Anspruch 1, **dadurch gekennzeichnet, dass** die Führungsöffnungen (21.1, 21.2) so ausgerichtet sind, dass die auf das Zugelement (13) wirkende Kraft das Verriegelungselement (17) an der Stützfläche (20) anliegend hält.

5. Anordnung (10) nach irgendeinem der Ansprüche 1 bis 4, **dadurch gekennzeichnet, dass** an dem Rahmen (11) Tragelemente (23.1, 23.2) zum Stützen des Auslegers (19) in Transportstellung angelenkt sind und an dem einen Ende dieser Tragelemente (23.1, 23.2) die besagte Anlenkung (24.1, 24.2) und am entgegengesetzten Ende ein Greifschenkel (25.1, 25.2) zum Stützen des Auslegers (19) angeordnet ist.

6. Anordnung (10) nach irgendeinem der Ansprüche 1 bis 5, **dadurch gekennzeichnet, dass** die beiderseits am Rahmen (11) angeordneten länglichen Führungsöffnungen (21.1, 21.2) an den inneren vom Rahmen (11) nach unten gerichteten Flanschen (37.1, 38.1) angeordnet sind und in einem Abstand von diesen inneren Flanschen (37.1, 38.1) vom Rahmen (11) nach unten gerichtete äußere Flansche (37.2, 38.2) angeordnet sind, und in dem Zwischenraum zwischen den inneren und den äußeren Flanschen (37.1, 38.1, 37.2, 38.2) die besagten Tragelemente (23.1, 23.2) hängend angelenkt sind.

7. Anordnung (10) nach irgendeinem der Ansprüche 1 bis 6, **dadurch gekennzeichnet, dass** die Führungsfläche (18) und die vertikale Stützfläche (20) von einem an der Oberseite (12') der Führung (12) angeordneten dreieckigen Gebilde (26) gebildet wird, wobei das Hypotenusenteil des dreieckigen Gebildes (26) die besagte Führungsfläche (18) und das Kathetenteil des dreieckigen Gebildes (26) die vertikale Stützfläche (20) des Verriegelungselements (17) bildet.

8. Anordnung (10) nach irgendeinem der Ansprüche 1 bis 7, **dadurch gekennzeichnet, dass** an dem Ausleger (19) ein in ihrem Querschnittsprofil geschlossene Heckwand (27) mit Anschlägen (28.1, 28.2) für die Greifschenkel (25.1, 25.2) der Tragelemente (23.1, 23.2) angeordnet ist.

9. Anordnung (10) nach den Ansprüchen 1 bis 8, **dadurch gekennzeichnet, dass** der Ausleger (19) Befestigungsstellen (35) für Hubarme (36) hat und diese besagten Befestigungsstellen (35) und die angelenkten Tragelemente (23.1, 23.2) funktional so zueinander angeordnet sind, dass die Tragelemente (23.1, 23.2) beim Heben des Auslegers (19) und dessen Zurückkehren unter die Befestigungsstellen (35) den Befestigungsstellen (35) ausweichen.

10. Anordnung (10) nach irgendeinem der Ansprüche 1 bis 9, **dadurch gekennzeichnet, dass** an den Gelenken (24.1, 24.2) der Tragelemente (23.1, 23.2) ein Drehstopper (rotation stop) (29) zum Freisetzen der Greifschenkel (25.1, 25.2) der Tragelemente (23.1, 23.2) von den Befestigungsstellen (35) angeordnet ist.

11. Anordnung (10) nach irgendeinem der Ansprüche 1 bis 10, **dadurch gekennzeichnet, dass** zur Gewährleistung einer ruhigen, stoßfreien Linearbewegung der Führung (12) an dem Ausleger (19) an dem Ausleger (19) Gleitschienen (30) und an der Führung (12) diesen entsprechende Ausformungen (31) vorhanden sind.

12. Anordnung (10) nach irgendeinem der Ansprüche 1 bis 11, **dadurch gekennzeichnet, dass** der Mittelbereich des mit seinen Enden an der Führungsvorrichtung (16) des Rahmens (11) angeordneten Verriegelungselements (17) in Zugstellung mit dem dreieckigen Gebilde (26) der zwischen der Führungsvorrichtung (16) angeordneten Führung (12) zusammenwirkt.

13. Anordnung (10) nach irgendeinem der Ansprüche 1 bis 12, **dadurch gekennzeichnet, dass** die Anordnung (10) an einem Traktor angeordnet ist.

14. Arbeitsmaschine, wie zum Beispiel Industrie- oder Landwirtschaftstraktor, **dadurch gekennzeichnet, das** zu der Arbeitsmaschine eine Anordnung (10) nach irgendeinem der Ansprüche 1 bis 13 gehört.

## Revendications

1. Un dispositif de crochet d'attelage (10) pour un engin de travail mobile, qui comprend
- un corps (11) à attacher à l'engin de travail mobile,
- une flèche (19) reliée à une extrémité (19.1) au corps (11) par un pivot,
- un guide (12) disposé de sorte à se déplacer de manière linéaire dans la flèche (19), et un élément de remorquage (13) y étant attaché, qui sont disposés de sorte à pouvoir être abaissés et relevés par rapport au corps (11) à l'aide de la flèche (19),
- dispositif de manoeuvre entraîné par un milieu (14) pour déplacer l'élément de remorquage (13) de manière linéaire, et
- un mécanisme de verrouillage (15) pour verrouiller l'élément de remorquage (13) lorsqu'on remorque l'objet (34) couplé à l'élément de remorquage (13),
et le mécanisme de verrouillage (15) comprend un dispositif de guidage (16) attaché au corps (11) et un élément de verrouillage (17) disposé de sorte à pouvoir se déplacer verticalement dans le dispositif de guidage (16), lequel mouvement vertical est obtenu par un guide (12) disposé de sorte à se déplacer de manière linéaire dans la flèche (19), **caractérisé en ce que** le dispositif de guidage (16) comprend des ouvertures de guidage allongées (21.1, 21.2) disposées de chaque côté du corps (11), entre lesquelles est disposé l'élément de verrouillage (17).

2. Dispositif (10) selon la revendication 1, **caractérisé en ce que,** en contact avec le guide (12), sur sa surface supérieure (12'), sont disposées
- une surface de soutien verticale (20) pour transmettre la force dirigée vers l'élément de remorquage (13) à travers l'élément de verrouillage (17) au corps (11), et
- une surface guide (18) pour déplacer l'élément de verrouillage (17) hors du passage de la surface de soutien verticale (20) lorsque l'on rétracte l'élément de remorquage (13) à l'intérieur de la flèche (19).

3. Dispositif (10) selon la revendication 1 ou 2, **caractérisé en ce que** le dispositif de manoeuvre (14) est disposé de sorte à former ledit guide (12).

4. Dispositif (10) selon la revendication 1, **caractérisé en ce que** les ouvertures de guidage (21.1, 21.2) sont orientées de sorte que la force agissant sur l'élément de remorquage (13) soit disposée de sorte à maintenir l'élément de verrouillage (17) contre la surface de soutien (20).

5. Dispositif (10) selon l'une quelconque des revendications 1 à 4, **caractérisé en ce que** des éléments porteurs (23.1, 23.2) sont reliés au corps (11) par un pivot pour soutenir la flèche (19) dans la position de transport, qu'une extrémité desdits éléments porteurs (23.1, 23.2) est pivotante (24.1, 24.2) et que l'extrémité opposée a une griffe (25.1, 25.2) pour soutenir la flèche (19).

6. Dispositif (10) selon l'une quelconque des revendications 1 à 5, **caractérisé en ce que** les ouvertures de guidage allongées (21.1, 21.2) disposées de chaque côté du corps (11) sont disposées sur les ailes (37.1, 38.1) intérieures qui pendent vers le bas par rapport au corps (11) et à une certaine distance desquelles sont disposées les ailes (37.2, 38.2) extérieures qui pendent vers le bas par rapport au corps (11) et que lesdits éléments porteurs (23.1, 23.2) sont montés par pivot et pendent dans l'espace entre les ailes intérieures et extérieures (37.1, 38.1, 37.2, 38.2).

7. Dispositif (10) selon l'une quelconque des revendications 1 à 6, **caractérisé en ce que** la surface guide (18) et la surface de soutien verticale (20) sont disposées à former une formation triangulaire (26) disposé sur la surface supérieure (12') du guide (12), où ladite surface de soutien (18) est formée par l'hypoténuse de la formation triangulaire (26) et la surface de soutien verticale (20) de l'élément de verrouillage (17) est formée par le petit côté de la formation triangulaire (26).

8. Dispositif (10) selon l'une quelconque des revendications 1 à 7, **caractérisé en ce que** le panneau arrière (27) avec un profile de section transversale fermé, qui comprend des taquets (28.1, 28.2) pour les griffes (25.1, 25.2) des éléments porteurs (23.1, 23.2) est disposé dans la flèche (19).

9. Dispositif (10) selon les revendications 1 à 8, **caractérisé en ce que** la flèche (19) comprend des points d'attache (35) pour les bras de relevage (36), lesdits points d'attache (35) et les éléments porteurs (23.1, 23.2) montés par pivot sont disposés opérationnellement relativement les uns aux autres de telle sorte que les éléments porteurs (23.1, 23.2) sont disposés de sorte à se déplacer hors du passage des points d'attache (35) lorsque la flèche (19) est levée et ensuite à retourner sous les points d'attache (35).

10. Dispositif (10) selon l'une quelconque des revendications 1 à 9, **caractérisé en ce qu'**un taquet de rotation (29) est disposé dans les pivots (24.1, 24.2) des éléments porteurs (23.1, 23.2) pour libérer les griffes (25.1, 25.2) des éléments porteurs (23.1, 23.2) des points d'attache (35).

11. Dispositif (10) selon l'une quelconque des revendications 1 à 10, **caractérisé en ce que** des glissières (30) sont disposées dans la flèche (19) et des formes (31) correspondantes sont disposées dans le guide (12) pour obtenir un mouvement linéaire régulier du guide (12) dans la flèche (19).

12. Dispositif (10) selon l'une quelconque des revendications 1 à 11, **caractérisé en ce que** dans la position de remorquage la partie médiane de l'élément de verrouillage (17) disposée par ses extrémités au dispositif de guidage (16) du corps (11) est disposé de sorte à correspondre à la formation triangulaire (26) du guide (12) disposé entre le dispositif de guidage (16) .

13. Dispositif (10) selon l'une quelconque des revendications 1 - 12, **caractérisé en ce que** le dispositif (10) est monté sur un tracteur.

14. Engin de travail mobile, comme par exemple un tracteur industriel ou agricole, **caractérisé en ce que** l'engin de travail contient un dispositif (10) selon l'une quelconque des revendications 1 à 13.
